# EUROPEAN PATENT APPLICATION

(11) **EP 1 079 211 A2**
(43) Date of publication of application: **28.02.2001**
(21) Application number: 99402746.4
(22) Date of filing: 04.11.1999
(51) Int. Cl.: G01F 1/11

(54) **Turbine flow meter**

(30) Priority: 24.08.1999 KR 9935231
(71) Applicant: G-Intek Co., Ltd., Kangdong-ku, Seoul (KR)
(72) Inventor: Suh, Jeong-Joo, Kangdong-ku, Seoul (KR)
(74) Representative: Moncheny, Michel

(57) **Abstract**

Disclosed is a turbine flow meter. The turbine flow meter includes a case including an intake and an exhaust; a housing provided inside the case, the housing receiving fluid entering the intake of the case and expelling the fluid through the exhaust of the case; an impeller rotatably provided in the housing and which transmits rotational force to flow measuring means, the impeller including a predetermined number of fins extending outwardly; means for directing the fluid onto the fins of the impeller to rotate the impeller; and means for directing the fluid out the exhaust of the case.

## Description

### BACKGROUND OF THE INVENTION

### (a) Field of the Invention

The present invention relates to a turbine flow meter, and more particularly, to a turbine flow meter that can precisely measure a volume of flow of a fluid such as oil, water and liquefied gas.

### (b) Description of the Related Art

Many different types of flow meters are used in industry and in the home. There are two typical methods in which the volume of fluid flow is measured by flow meters: (a) a method in which energy generated by a flow stream is directly used to measure fluid flow, and (b) a method in which a speed of a flow stream is externally measured to determine fluid flow. Examples of flow meters using the above method (a) to measure the volume of fluid flow include volume, area, differential pressure and turbine flow meters, while ultrasonic and mass flow meters are examples of flow meters using the above method (b) to measure the volume of fluid flow.

Among the different types of flow meters listed above, the turbine flow meter is one of the most commonly used. A turbine, impeller or other such rotating member is disposed in the turbine flow meter, and fluid flow is measured by the number of revolutions of the turbine or impeller. Fluid entering the turbine flow meter rotates the rotating member, after which the fluid exits the flow meter. The amount of fluid needed to rotate the rotating member by one, complete revolution is pre-measured such that the volume of fluid flow can be measured by the number of revolutions of the rotating member over a specific time interval. Measurement results are displayed in units of gallons, liters, etc. through a display.

However, in the prior art flow meter as described above, the turbulence in the fluid stream and the resistance generated at locations where the fluid enters and exits the flow meter affect the rotation of the rotating member such that the precise measurement of fluid flow is not possible. Further, measurements are also made inexact by resistance produced by an element which supports the rotating member. That is, resistance generated by this support element when the flow stream enters and exits the flow meter acts to slow the rotational speed of the rotating member, thereby making measurements of fluid flow volume inaccurate.

### SUMMARY OF THE INVENTION

The present invention has been made in an effort to solve the above problems.

It is an object of the present invention to provide a turbine flow meter that can precisely measure a volume of flow of a fluid such as oil, water and liquefied gas.

To achieve the above object, the present invention provides a turbine flow meter. The turbine flow meter includes a case including an intake and an exhaust; a housing provided inside the case, the housing receiving fluid entering the intake of the case and expelling the fluid through the exhaust of the case; an impeller rotatably provided in the housing and which transmits rotational force to flow measuring means, the impeller including a predetermined number of fins extending outwardly; means for directing the fluid onto the fins of the impeller to rotate the impeller; and means for directing the fluid out the exhaust of the case.

According to a feature of the present invention, there is further provided means for dispersing the fluid entering the case through the intake.

According to another feature of the present invention, the means for dispersing the fluid comprises a plurality of guide ribs formed as protrusions.

According to yet another feature of the present invention, the guide ribs are formed extending on a face of the housing adjacent to the intake of the case.

According to still yet another feature of the present invention, a height of the guide ribs progressively decreases in a direction toward a circumference of the housing.

According to still yet another feature of the present invention, the housing includes a plurality of inflow holes and outflow holes passing through a lateral wall of the housing, and a flange provided extending around an outer circumference of the housing between the inflow holes and the outflow holes; and wherein the case includes a ridge provided extending from an inner circumference of the case, the flange of the housing contacting the ridge of the case.

According to still yet another feature of the present invention, the inflow holes and the outflow holes pass through the lateral wall of the housing in a curve shape.

According to still yet another feature of the present invention, an area of the inflow holes progressively increases in a direction toward the outer circumference of the housing, and an area of the outflow holes progressively decreases in a direction toward the outer circumference of the housing.

According to still yet another feature of the present invention, the flow measuring means determines a volume of fluid flow by a rotation of gears connected to the impeller.

According to still yet another feature of the present invention, the flow measuring means comprises one or more sensors directly connected to the impeller or disposed in proximity to the impeller, the sensors detecting a rotation of the impeller to determine a volume of fluid flow.

According to still yet another feature of the present invention, the fins of the impeller are provided on an end of the impeller inserted in the housing, and are formed such that one side of each of the fins is tapered at end thereof.

According to still yet another feature of the present invention, a spindle is fixedly inserted in the end of the impeller corresponding to the formation of the fins such that a face of the spindle on an end of the same is substantially flush with the end of impeller corresponding to the formation of the fins, the face of the spindle having formed a circular groove, and wherein a support is fixedly disposed within the housing corresponding to the location of the spindle, a distal end of the support including a ball positioned in the groove of the spindle to minimize friction generated by the rotation of the impeller.

According to still yet another feature of the present invention, the spindle is made of wear-resistant artificial sapphire.

According to still yet another feature of the present invention, the ball of the support is made of wear-resistant ceramic material.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 is an exploded perspective view of a turbine flow meter according to a preferred embodiment of the present invention;
FIG. 2 is another exploded perspective view of the turbine flow meter shown in FIG. 1;
FIG. 3a is an enlarged perspective view of an impeller housing shown in FIG. 1;
FIG. 3b is a sectional view of an upper half of the impeller housing shown in FIG. 1;
FIG. 3c is a sectional view of a lower half of the impeller housing shown in FIG. 1;
FIG. 4 is an elevation view of an impeller shown in FIG. 1; and
FIG. 5 is a sectional view of the turbine flow meter shown in FIG. 1 in an assembled state.

### DETAILED DESCRIPTION OF THE PREFERRED EMBODIMENTS

Preferred embodiments of the present invention will now be described in detail with reference to the accompanying drawings.

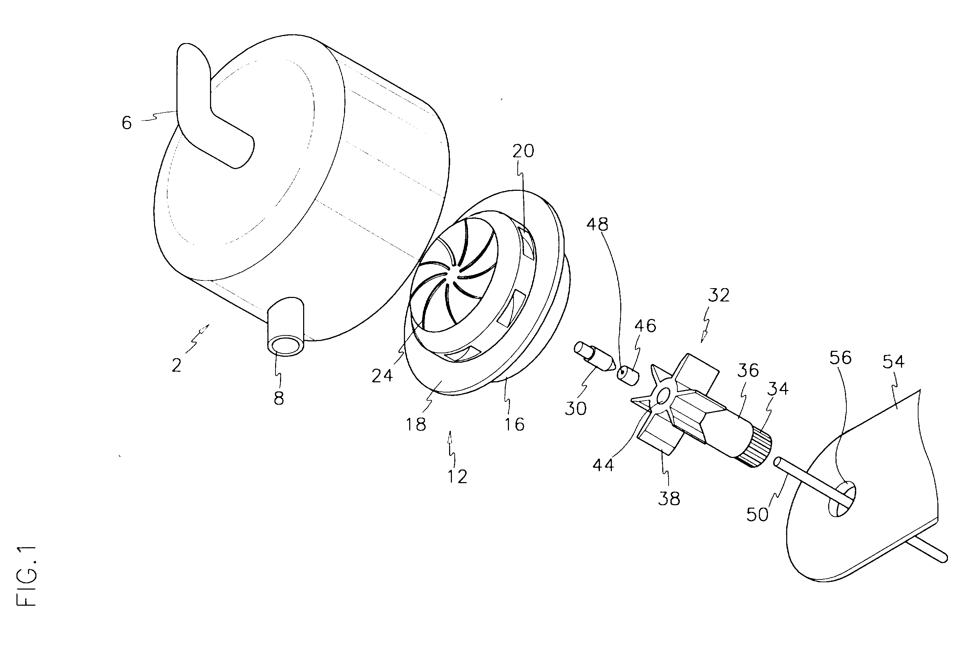

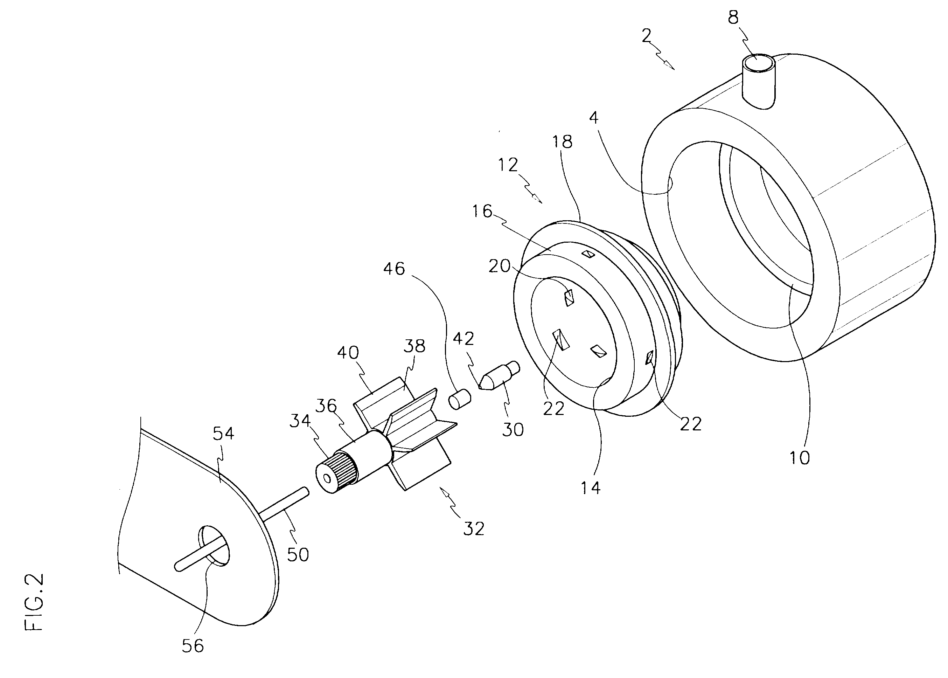

FIGs. 1 and 2 are exploded perspective views of a turbine flow meter according to a preferred embodiment of the present invention. Reference numeral 2 in the drawings indicates a case of the turbine flow meter, other elements of the turbine flow meter being provided inside the case 2 when assembled.

The case 2 is cylindrical with its one end open and its other end closed such that an internal cavity 4 is formed in the case 2. An intake pipe 6 is formed extending substantially from a center of the closed end of the case 2, and an exhaust pipe 8 is formed extending from a predetermined location of a lateral wall of the case 2. The intake pipe 6 and the exhaust pipe 8 are hollow, and fluid (e.g., water, oil, and liquefied gas) enters and exits the cavity 4 via the intake pipe 6 and the exhaust pipe 8, respectively. Prior to entrance into the turbine flow meter through the intake pipe 6, it is preferable that the fluid undergoes specific processes to remove foreign substances and to ensure that air bubbles in the fluid are at a predetermined size so that more precise measurements of fluid flow volume are possible.

A ridge 10 is provided in the cavity 4 of the case 2. The ridge 10 is formed starting at a predetermined distance from the open end of the case 2 and extends a predetermined distance in a direction toward the closed end of the case 2 following a circumference of the cavity 4. The ridge 10 protrudes slightly in a direction toward a longitudinal axis of the case 2 such that a circumference of the ridge 10 is smaller than the circumference of the cavity 4.

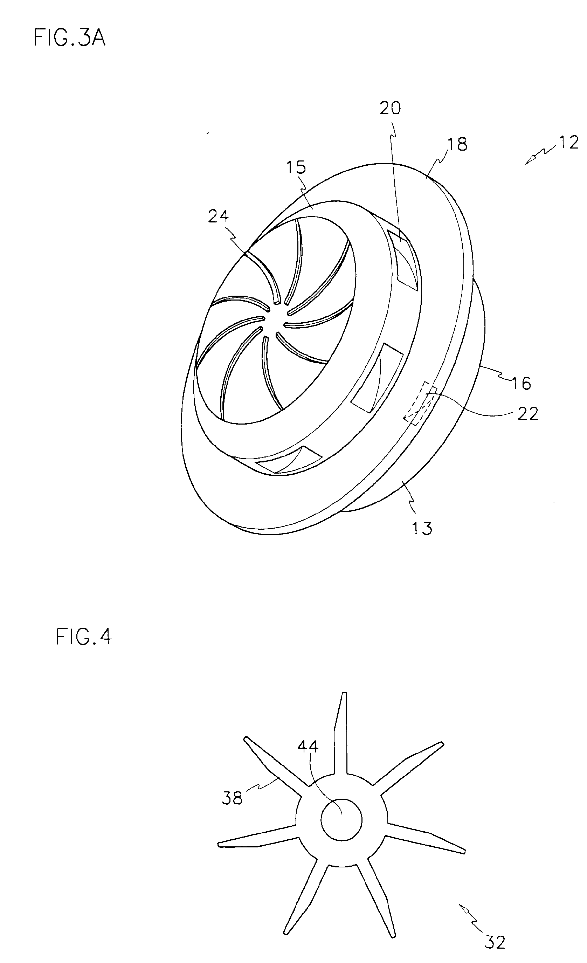

The turbine flow meter also includes an impeller housing 12. The impeller housing 12, with reference also to FIG. 3a, includes a body 16 and a flange 18, the flange 18 being formed extending outwardly from an outer circumference of the body 16 to divide the body 16 into an upper half 15 and a lower half 13. The body 16 is cylindrical and closed on its one end, and open on its other end such that a hollow 14 is formed in the impeller housing 12. The flange 18 contacts the ridge 10 formed in the cavity 4 of the case 2 to position the impeller housing 12 inside the case 2 such that the impeller housing 12 is provided at a predetermined distance from a hole of the case 2 leading to the intake pipe 6.

Formed around the circumference of the upper half 15 of the body 16 at predetermined intervals are a plurality inflow holes 20, and formed around the circumference of the lower half 13 of the body 16 at predetermined intervals are a plurality of outflow holes 22, the inflow holes 20 and the outflow holes 22 passing through a lateral wall of the body 16 to communicate the hollow 14 with the outside of the impeller housing 12. The inflow holes 20 and the outflow holes 22 are formed staggered such that no one pair of openings of the inflow and outflow holes 20 and 22 are aligned in a vertical direction. Further, a plurality of guide ribs 24 are formed on an outer surface of the closed end of the body 16, the guide ribs 24 directing the fluid entering the case 2 via the intake pipe 6 to the inflow holes 20.

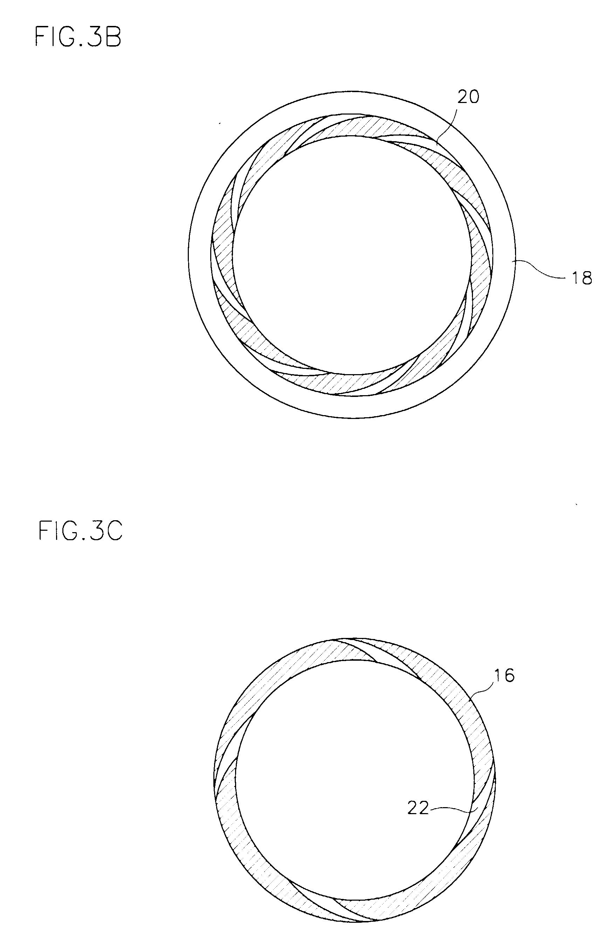

FIG. 3b is a sectional view of the upper half 15 of the body 16 of the impeller housing 12. With reference also to FIG. 3a, each of the inflow holes 20 passes through the lateral wall of the body 16 in a curved shape such that an opening and an exit of the inflow holes 20 are provided at different locations around the circumference of the impeller housing 12. Also, an area of the inflow holes 20 progressively decreases in a direction toward the hollow 14.

FIG. 3c is a sectional view of the lower half 14 of the body 16 of the impeller housing 12. With reference also to FIG. 3a, each of the outflow holes 22 passes through the lateral wall of the body 16 in a curved shape such that an opening and an exit of the outflow holes 22 are provided at different locations around the circumference of the impeller housing 12. The curved shape of the outflow holes 22 is identical to the curved shape of the inflow holes 20 formed in the upper half 15 of the body 16. However, opposite the inflow holes 20, an area of the outflow holes 22 progressively increases in a direction toward the hollow 14.

The guide ribs 24, which are formed on the outer surface of the closed end of the body 16 to direct the fluid entering the case 2 via the intake pipe 6 to the inflow holes 20 as described above, are provided at predetermined intervals and in a shape to better direct the fluid into the curve-shaped inflow holes 20. Also, the guide ribs 24 are formed at a progressively decreasing height in a direction toward the outer circumference of the closed end of the body 16 so that the fluid is more smoothly directed to the inflow holes 20. Accordingly, fluid entering the case 2 through the intake pipe 6 contacts the guide ribs 24 and follows the shape of the same to form a fluid swirl. Since the direction of the fluid swirl corresponds to the curve shape of the inflow holes 20, the fluid is better directed into the inflow holes 20.

Fixedly provided at a center of the closed end of the body 16 on a side opposite where the guide ribs 24 are formed (i.e., in the hollow 14) is a support 30. Rotatably contacting an end of the support 30 opposite that fixed to the closed end of the body 16 is an impeller 32. A plurality of gear teeth 34 are formed on an end of the impeller 32 opposite that contacting the support 30, and a plurality of fins 38 are formed on the other end of the impeller 32. The fins 38 are provided extending from an outer circumference of the impeller 32 at predetermined intervals.

Fluid entering the impeller housing 12 through the inflow holes 20 rotates the impeller 32 by contact with the fins 38. That is, fluid entering the impeller housing 12 through the inflow holes 20 travels in a direction corresponding to the curved formation of the inflow holes 20 such that the force of the fluid as it contacts the fins 38 rotates the impeller 32. The fins 38 then direct the fluid out the outflow holes 22 of the impeller housing 12. The inflow and outflow of the fluid is made smooth by the staggering formation of the inflow and outflow holes 20 and 22, and by the identical curved shape of the inflow and outflow holes 20 and 22 as described above.

The volume of the fluid entering the turbine flow meter is calculated by determining the amount of fluid needed for each rotation of the impeller 32, and by counting the number of revolutions of the impeller 32 over a set time.

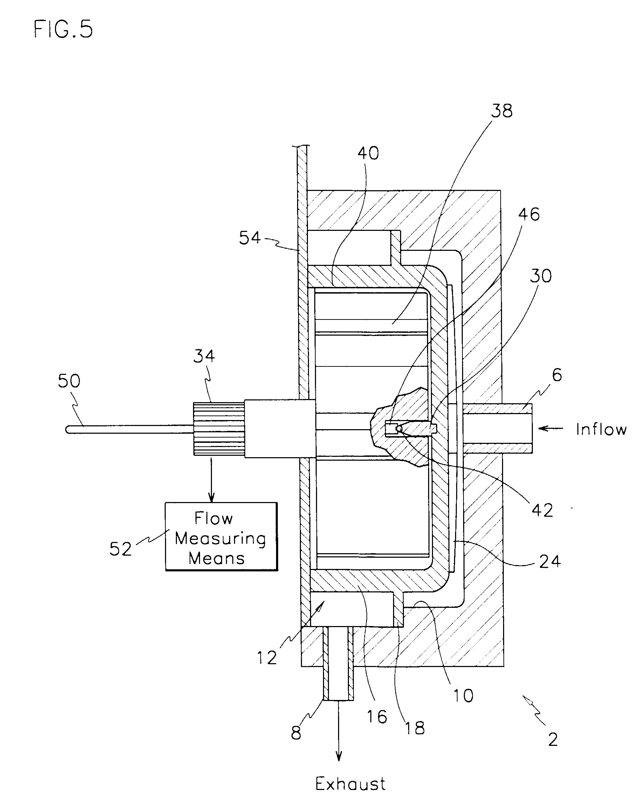

FIG. 4 is an elevation view of the impeller 32. As shown in the drawing, one side of each of the fins 38 is tapered at end thereof. This allows the fluid to be better exhausted through the outflow holes 22 by the fins 38. That is, the tapered ends of the fins 38 are formed on sides thereof corresponding to the rotating direction of the impeller 32 such that resistance given by the fluid is reduced. Also, the tapered ends of the fins 38 act to increase a surface of the fins 38 contacting the fluid, thereby enabling a more smooth exhaust of the fluid.

Referring back to FIGs. 1 and 2, a spindle 46 is fixed in the end of the impeller 32 corresponding to the formation of the fins 38. That is, the spindle 46 is fixed in an orifice 44 provided passing through a longitudinal axis of the impeller 32. A face of the spindle 46 on the distal end of the same is provided with a circular groove 48. Further, a ball 42 is disposed on the end of the support 30 contacting the impeller 32. When the ball 42 of the support 30 is positioned in the groove 48 of the spindle 46, minimal friction is generated between the rotation of the support 30 and the impeller 32 when the impeller 32 rotates.

It is possible to make the ball 42 out of ceramic having good durability characteristics and it possible to make the spindle 46 out of artificial sapphire which is wear-resistant and has a low resistance coefficient. By using such materials to make the ball 42 and spindle 46, a minimization of friction between the support 30 and impeller 32 can be ensured.

Fixedly inserted in the orifice 44 of the impeller 32 at the end of the impeller 32 corresponding to the formation of the gear teeth 34 is a rod 50. The rod 50 is rotatably provided in a support member (not shown). A support plate 54 having a hole 56 is fixed to the open end of the impeller housing 12. The rod 50 and the body of the impeller 32 (not including the fins 38) passes through the hole 56 of the support plate 54 when the turbine flow meter is assembled as shown in FIG. 5.

The gear teeth 34 at the end of the impeller 32 are meshed to flow measuring means 52 (shown only in block diagram form). The flow measuring means 52 has gears that rotate with the rotation of the impeller 32, and a microprocessor of the flow means determines the volume of fluid flow by the rotation of the gears. For example, if one rotation of the impeller 32 is determined to equal 0.1 liter of fluid a predetermined rotation of the gears of the flow measuring means 52, ten revolutions of the impeller 32 equals 1 liter of fluid flow. At this time, it is possible to connect the gears of the flow measuring means 52 directly to a mechanical counter or for the display of fluid flow volume to be performed electronically. Of course, the turbine flow meter can be set so that other units of measure such as gallons are displayed.

As described above, the volume of fluid flow is determined by the rotation of the gears of the flow measuring means 52 resulting from their mesh with the gear teeth 34 of the impeller 32. However, the present invention is not limited to this configuration and it is possible provide a sensor(s) on or around the impeller 32 to more directly determine the rotation of the same.

An operation of the turbine flow meter will be described in detail hereinbelow with reference again to FIG. 5, illustrating a sectional view of the turbine flow meter in an assembled state.

As described above, prior to entrance into the turbine flow meter through the intake pipe 6, it is preferable that the fluid undergoes specific processes to remove foreign substances and to ensure that air bubbles in the fluid are at a predetermined size. Fluid processed in this manner then enters the case 2, forms a fluid swirl by contacting the guide ribs 24 of the impeller housing 12, then enters the inflow holes 20. By the curved shape of the inflow holes 20, the fluid is dispersed in the hollow 14 of the impeller housing 12, and the force of the fluid flow rotates the impeller 32 after contact with the fins 38 of the same. After rotating the impeller, the fluid is expelled from the impeller housing 12 through the outflow holes 22. Such rotation of the impeller 32 enables the calculation of fluid flow volume as described above.

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1. A turbine flow meter comprising:
a case including an intake and an exhaust;
a housing provided inside the case, the housing receiving fluid entering the intake of the case and expelling the fluid through the exhaust of the case;
an impeller rotatably provided in the housing and which transmits rotational force to flow measuring means, the impeller including a predetermined number of fins extending outwardly;
means for directing the fluid onto the fins of the impeller to rotate the impeller; and
means for directing the fluid out the exhaust of the case.

2. The turbine flow meter of claim 1 further comprising means for dispersing the fluid entering the case through the intake.

3. The turbine flow meter of claim 2 wherein the means for dispersing the fluid comprises a plurality of guide ribs formed as protrusions.

4. The turbine flow meter of claim 3 wherein the guide ribs are formed extending on a face of the housing adjacent to the intake of the case.

5. The turbine flow meter of claim 3 wherein a height of the guide ribs progressively decreases in a direction toward a circumference of the housing.

6. The turbine flow meter of claim 4 wherein a height of the guide ribs progressively decreases in a direction toward a circumference of the housing.

7. The turbine flow meter of claim 1 wherein the housing includes a plurality of inflow holes and outflow holes passing through a lateral wall of the housing, and a flange provided extending around an outer circumference of the housing between the inflow holes and the outflow holes; and wherein the case includes a ridge provided extending from an inner circumference of the case, the flange of the housing contacting the ridge of the case.

8. The turbine flow meter of claim 7 wherein the inflow holes and the outflow holes pass through the lateral wall of the housing in a curve shape.

9. The turbine flow meter of claim 8 wherein an area of the inflow holes progressively increases in a direction toward the outer circumference of the housing, and an area of the outflow holes progressively decreases in a direction toward the outer circumference of the housing.

10. The turbine flow meter of claim 1 wherein the flow measuring means determines a volume of fluid flow by a rotation of gears connected to the impeller.

11. The turbine flow meter of claim 1 wherein the flow measuring means comprises one or more sensors directly connected to the impeller or disposed in proximity to the impeller, the sensors detecting a rotation of the impeller to determine a volume of fluid flow.

12. The turbine flow meter of claim 1 wherein the fins of the impeller are provided on an end of the impeller inserted in the housing, and are formed such that one side of each of the fins is tapered at end thereof.

13. The turbine flow meter of claim 12 wherein a spindle is fixedly inserted in the end of the impeller corresponding to the formation of the fins such that a face of the spindle on an end of the same is substantially flush with the end of impeller corresponding to the formation of the fins, the face of the spindle having formed a circular groove, and wherein a support is fixedly disposed within the housing corresponding to the location of the spindle, a distal end of the support including a ball positioned in the groove of the spindle to minimize friction generated by the rotation of the impeller.

14. The turbine flow meter of claim 13 wherein the spindle is made of wear-resistant artificial sapphire.

15. The turbine flow meter of claim 13 wherein the ball of the support is made of wear-resistant ceramic material.

16. The turbine flow meter of claim 1 wherein the means for directing the fluid onto the fins of the impeller comprises inflow holes passing through a lateral wall of the housing in a curve shape such that fluid entering the housing via the inflow holes is forced in one direction onto the fins of the impeller.

17. The turbine flow meter of claim 1 wherein the means for directing the fluid out the exhaust of the case comprises outflow holes passing through a lateral wall of the housing in a curve shape such that fluid rotating the impeller by contact with the fins of the same easily enter the outflow holes to be expelled from the housing.
